# EUROPÄISCHE PATENTSCHRIFT

(11) **EP 1 747 955 B1**
(45) Veröffentlichungstag und Bekanntmachung des Hinweises auf die Patenterteilung: **12.03.2008**
(21) Anmeldenummer: 06117688.9
(22) Anmeldetag: 21.07.2006
(51) Int. Cl.: B60R 25/00, G07C 9/00

(54) **Verfahren zur Überprüfung einer Legitimation für einen Zugriff auf ein Kraftfahrzeug**
Verification method for a vehicle access legitimation
Procédé de vérification d'une légitimation d'accès à un véhicule

(30) Priorität: 25.07.2005 DE 102005035263
(43) Veröffentlichungstag der Anmeldung: 31.01.2007
(73) Patentinhaber: Huf Hülsbeck & Fürst GmbH & Co. KG, 42551 Velbert (DE)
(72) Erfinder: Schindler, Mirko, 42549 Velbert (DE)
(74) Vertreter: Schmidt, Frank-Michael

(56) Entgegenhaltungen:
- WO-A-01/23227
- DE-A1- 19 901 364
- DE-A1- 19 941 346

## Beschreibung

Die Erfindung betrifft ein Verfahren zur Überprüfung einer Legitimation für einen Zugriff auf ein Kraftfahrzeug.

Es ist bekannt, Benutzern von Fahrzeugen einen schlüssellosen Zugang zum Kraftfahrzeug zu ermöglichen (Keyless-Entry). In entsprechend vorbereiteten Fahrzeugen ist üblicherweise ein Funksystem integriert, das mit einem sogenannten ID-Geber kommunizieren kann, den ein berechtigter Benutzer bei sich trägt.

Eine Kommunikation zwischen dem Funksystem und dem ID-Geber wird gestartet, sobald eine beliebig geartete Anforderung an das Funksystem erfolgt, beispielsweise dadurch, daß sich eine Hand des Benutzers einem Türgriff des Fahrzeugs nähert. Eine solche Kommunikation kann auch durch den ID-Geber initiiert werden, zum Beispiel bei einer in einem Fahrzeugschlüssel integrierten Fernbedienung für eine Fahrzeug-Verriegelung.

Bei derartigen Zugangs-Systemen ist es wichtig sicherzustellen, daß ausschließlich Berechtigte Zugriff zu dem Fahrzeug erhalten. Insbesondere ist zu prüfen, ob sich der Berechtigte bei Überprüfung der Legitimation in der Nähe des Fahrzeugs aufhält, da nur dann von einer legitimen Zugriffssituation auszugehen ist. Fahrzeugseitige Funksysteme sind meist derart ausgelegt, daß die Signale für eine Kommunikation mit dem ID-Geber nur eine kurze Reichweite aufweisen. Es sind ferner Systeme bekannt, die anhand einer Feldverteilung der Funkfelder eine Bestimmung des ID-Geber-Standorts vornehmen, zum Beispiel aus der EP 1 189 306 A1.

Es ist auch bekannt, daß Unberechtigte den Versuch unternehmen, die kurzreichweitige Kommunikation zwischen ID-Geber und Steuereinrichtung im Fahrzeug zu verlängern, indem eine Funkstrecke mit zwei Sendeempfängern zwischengeschaltet wird. So kann zum Beispiel ein Unberechtigter, der durch eine Berührung des Fahrzeugtürgriffs die Prüfung der Legitimation anfordert, dann Zugriff erhalten, wenn er einen entsprechenden Sendeempfänger zum Empfang der Signale aus dem Fahrzeug verwendet, diese an einen anderen Sendeempfänger sendet und sich der andere Sendeempfänger in der Nähe des ID-Gebers eines Zugriffsberechtigten befindet. Da die Kommunikation über die Verlängerungsstrecke auf diese Weise mit einem zugriffsberechtigten ID-Geber erfolgt, wird die Manipulation von dem Fahrzeug nicht bemerkt und der Unberechtigte erlangt Zugriff auf das Fahrzeug. Der bekannte schlüssellose Zugang zum Fahrzeug ist vor derartigen Manipulationen nicht geschützt.

Das Dokument WO-A-01/23227 offenbart ein System gemäß dem Oberbegriff des Anspruchs 1.

Der vorliegenden Erfindung liegt dementsprechend die Aufgabe zugrunde, den schlüssellosen Zugang zum Fahrzeug sicherer zu machen.

Diese Aufgabe wird erfindungsgemäß durch ein Verfahren mit den Merkmalen des Anspruchs 1 gelöst.

Bei dem erfindungsgemäßen Verfahren zur Überprüfung einer Legitimation für einen Zugriff auf ein Kraftfahrzeug wird zunächst die Überprüfung der Legitimation angefordert. Eine in dem Fahrzeug angeordnete Steuereinrichtung codiert dann erste Daten mit einem ersten Algorithmus und sendet die codierten ersten Daten in einer ersten Nachricht mit Hilfe einer mit der Steuereinrichtung gekoppelten Funksendeeinrichtung. Unter einer Nachricht soll hier ein beliebiger Abschnitt eines Signals verstanden werden, beispielsweise eines eine Trägerfrequenz modulierenden Signals. Die erste Nachricht wird in einem dem Fahrzeug zugeordneten ID-Geber empfangen, und die ersten Daten werden in dem ID-Geber decodiert. Der ID-Geber bestimmt ein Frequenzmuster in Abhängigkeit von den ersten Daten. Ein Frequenzmuster ist hier ganz allgemein ein Frequenz-Zeit-Verlauf, im einfachsten Fall eine ausgewählte innerhalb des Frequenzmusters nicht wechselnde Frequenz. Anschließend wird eine Funk-kommunikation zwischen einer Funksendeeinrichtung des ID-Gebers und einer Empfangseinrichtung der Steuereinrichtung ausgeführt, wobei - zumindest bei der Übertragung einer zweiten Nachricht - die Trägerfrequenz der Sendeeinrichtung des ID-Gebers gemäß dem Frequenzmuster gewählt wird. Die zweite Nachricht enthält codierte zweite Daten. Die Empfangseinrichtung wird von der Steuereinrichtung in Abhängigkeit von den ersten Daten auf die jeweiligen Trägerfrequenzen gemäß dem Frequenzmuster abgestimmt. In Abhängigkeit von den zweiten Daten wird dann die Legitimation für einen Zugriff auf das Kraftfahrzeug bestimmt. Die Empfangseinrichtung der Steuereinrichtung ist deshalb in der Lage, sich auf die jeweils richtige Trägerfrequenz des Frequenzmusters abzustimmen, weil die Steuereinrichtung sowohl die ersten Daten als auch den Algorithmus kennt, mit dessen Hilfe des Frequenzmuster aus den ersten Daten berechnet wird.

Erfindungsgemäß wird für die Überprüfung der Legitimation nicht ausschließlich der Inhalt einer Kommunikation zwischen dem ID-Geber und der Steuereinrichtung im Kraftfahrzeug ausgewertet. Die Kommunikation wird zusätzlich gesichert, indem die Kommunikations-Trägerfrequenzen gemäß einem Frequenzmuster gewählt werden. Dieses Frequenzmuster wird in Abhängigkeit von den ersten Daten bestimmt, die von der Steuereinrichtung an den ID-Geber gesendet werden. Nur die Steuereinrichtung und der ID-Geber sind in der Lage, das Frequenzmuster zu bestimmen und die Kommunikation auszuführen, da nur ihnen die ersten Daten bekannt sind. Sollten die ersten Daten jedoch von unberechtigten aus der anfänglichen Kommunikation ermittelt werden, ist dem Unberechtigten zumindest die Bestimmungsvorschrift für das Frequenzmuster unbekannt. Daher kann eine böswillig verlängerte Funkstrecke mit Sendeempfängern der Kommunikation gemäß dem Frequenzmuster nicht folgen. Selbst wenn also zunächst die ersten Daten erfolgreich über die böswillig verlängerte Funkstrecke an den ID-Geber übermittelt werden, weil die Verlängerungsstrecke auf die entsprechende Sendefrequenz der Sendeeinrichtung der Steuereinrichtung eingestellt ist, antwortet der ID-Geber mit einer Übertragung gemäß einem Frequenzmuster, auf das die Verlängerungsstrecke nicht eingestellt ist. Wenn aber die Empfangseinrichtung der "Verlängerung" nicht dem Frequenzmuster des ID-Gebers folgen kann, so ist keine Weitergabe an das Kraftfahrzeug möglich. Selbst dann, wenn die "Verlängerung" einen breitbandigen Empfänger auf der ID-Geber-Seite verwendet und somit die Abstrahlung des ID-Gebers empfangen kann, ist es extrem aufwendig, auf der Kraftfahrzeugseite einen Sender zu implementieren, der dem Frequenzmuster verzögerungsfrei folgen kann. Wenn aber die Kommunikation in Folge einer böswilligen Verlängerung nicht gemäß dem Frequenzmuster erfolgt, kommt eine Datenübertragung nicht zustande, und eine Legitimation wird fahrzeugseitig immer abgewiesen.

Bei dem erfindungsgemässen Verfahren wird beim Ausführen der Funk-Kommunikation von der mit der Empfangseinrichtung gekoppelten Steuereinrichtung überprüft, ob von dem Frequenzmuster abweichende weitere Trägerfrequenzen (d.h. mehrere Trägerfrequenzen parallel) abgestrahlt werden. Wird erfasst, dass auf verschiedenen Trägerfrequenzen, die von dem bestimmten Frequenzmuster abweichen, Abstrahlung stattfindet, deutet dies auf den Versuch einer breitbandigen oder zumindest Mehrfrequenz-Verlängerung der Funkstrecke hin. Der ID-Geber sendet nämlich mit seiner Sendeeinrichtung auf der nach dem Frequenzmuster bestimmten Frequenz.

Eine entsprechende Erfassung kann in der Steuereinrichtung zusätzlich derart ausgewertet werden, dass böswillige Verlängerungsversuche von üblichen Störungen, die beispielsweise durch in der Nähe gleichzeitig stattfindende Zugriffsversuche auf andere Kraftfahrzeuge verursacht werden, unterschieden werden. Es kann z.B. vorgesehen werden, dass wenigstens eine Mindestzahl oder Mindestdauer von Abstrahlungen auf von dem Frequenzmuster abweichenden Frequenzen vorliegen muss, bevor dies als Versuch einer "Verlängerung" gewertet wird. Wenn dies festgestellt wird, wird die Funk-Kommunikation ohne weitere Prüfung der Legitimation abgebrochen.

Es wird demnach der Inhalt einer Kommunikation mit der Art der Kommunikation verknüpft. Die Sicherheit der Kommunikation und des Zugriffs auf das Kraftfahrzeug wird daher bei dem erfindungsgemäßen Verfahren erhöht.

Eine anfängliche Anforderung der Überprüfung der Legitimation kann mit Hilfe bekannter Mittel erreicht werden, wie zum Beispiel Sensoren, Schaltern oder durch Senden von Anforderungssignalen an die Steuereinrichtung.

Die Steuereinrichtung codiert die ersten Daten mit einem ersten Algorithmus und sendet diese Daten in einer ersten Nachricht auf einer ersten Frequenz. Die Art der Codierung und die Frequenz können bei jeder Überprüfung anfänglich fest vorgegeben sein, jedoch auch veränderlich sein, z.B. uhrzeitabhängig variiert werden. Jedenfalls muß der ID-Geber Kenntnis von der verwendeten Frequenz und der Art der Codierung haben. Dem ID-Geber muß insbesondere der Decodierungs-Algorithmus bekannt sein.

Die ersten Daten können zum Beispiel auch in Abhängigkeit von einer Kennung des angesprochenen ID-Gebers codiert sein. Die erste Frequenz kann im Niederfrequenzbereich, zum Beispiel bei 125 KHz, liegen. Sofern sich der ID-Geber bereits in einem sende- beziehungsweise empfangsbereiten Zustand befindet, kann auch eine höhere Frequenz, von zum Beispiel 433 MHz verwendet werden.

Die Nachricht mit den codierten ersten Daten wird von dem ID-Geber empfangen und decodiert. Sofern die ersten Daten in Abhängigkeit von einer Kennung des ID-Gebers codiert wurden, decodiert der ID-Geber unter Verwendung seiner eigenen ID-Geber-Kennung die Daten.

Wenn die ersten Daten decodiert vorliegen, wird von dem ID-Geber ein Frequenzmuster in Abhängigkeit von den ersten Daten bestimmt. Es ist eine eindeutige Zuordnung von den ersten Daten zu einem Frequenzmuster sicher zu stellen, da sonst die Steuereinrichtung gegebenenfalls nicht das identische Frequenzmuster ermittelt und eine nachfolgende Kommunikation nicht möglich ist. Dann müßte die Legitimation erneut überprüft werden. Für die Bestimmung des Frequenzmusters kann beispielsweise eine Rechenvorschrift oder eine fest eingespeicherte Verweistabelle verwendet werden, die eine Zuordnung von Daten zu Frequenzmustern gespeichert hat. Auch die Steuereinrichtung bestimmt in Abhängigkeit von den ersten Daten ein identisches Frequenzmuster. ID-Geber und Steuereinrichtung sind danach auf die Kommunikation vorbereitet und auf eine zu verwendende anfängliche Frequenz abgestimmt. Dann wird die Funk-Kommunikation zwischen einer Funksendeeinrichtung des ID-Gebers und einer Empfangseinrichtung der Steuereinrichtung gestartet. Während der gemäß dem Frequenzmuster erfolgenden Kommunikation wird eine zweite Nachricht mit codierten zweiten Daten übertragen. Das Frequenzmuster kann zum Beispiel zeitlich bestimmte Frequenzwechsel und/oder Sendepausen enthalten. Ein Paar von Sendeempfängern zur böswilligen Verlängerung der Funkstrecke kann diese Kommunikation nicht verlängern, da sie auf das Frequenzmuster nicht eingestellt sind.

Ferner kann das Frequenzmuster auch eine Variation der Sendeamplitude vorsehen. In einer Funk-Verlängerungsstrecke kann dann nicht unterschieden werden, ob diese Amplitudenverstärkung beziehungsweise dieser Amplitudenabfall vorgesehen, also Teil des Frequenzmusters ist, oder ob diese Änderung z.B. auf eine Störung der Verlängerungsstrecke zurückzuführen ist.

Sofern die Kommunikation nicht erfolgreich beendet wird, weil beispielsweise eine Verlängerungsstrecke zwischengeschaltet ist, die der Kommunikation nicht folgen kann, gibt das Steuergerät den Zugriff auf das Fahrzeug nicht frei. Nach erfolgreicher Kommunikation gemäß dem bestimmten Frequenzmuster werden die zweiten Daten in der Steuereinrichtung geprüft und in Abhängigkeit von den zweiten Daten wird der Zugriff auf das Fahrzeug freigeben beziehungsweise nicht freigeben.

ID-Geber befinden sich üblicherweise nicht ununterbrochen in einem energieintensiven Sende/Empfangszustand. Es ist daher bei dem erfindungsgemäßen Verfahren vorteilhaft, wenn nach dem Anfordern der Überprüfung der Legitimation zunächst ein Wecksignal mit Hilfe der Funksendeeinrichtung der Steuereinrichtung gesendet wird, und wenigstens ein ID-Geber auf das Wecksignal hin ein Antwortsignal an die Steuereinrichtung sendet, bevor die codierten ersten Daten gesendet werden.

Das Funk-Wecksignal kann in einem Frequenzbereich abgestrahlt werden, in dem ein Transponder in einem ID-Geber, der sich in einem passiven Zustand befindet, aufgeweckt wird. Zum Beispiel kann eine Frequenz von 125 KHz verwendet werden. Jeder durch das Signal aufgeweckte ID-Geber im Umkreis sendet ein Antwortsignal an die Steuereinrichtung.

Senden mehrere ID-Geber ein Antwortsignal an die Steuereinrichtung, wird vorzugsweise einer der ID-Geber von der Steuereinrichtung als der dem Kraftfahrzeug zugeordnete ID-Geber ausgewählt.

Sofern sich mehrere ID-Geber im Umkreis des Kraftfahrzeugs befinden, muß sichergestellt werden, daß die nachfolgende Kommunikation beziehungsweise Überprüfung der Legitimation nur mit einem der ID-Geber durchgeführt wird. Dazu kann zum Beispiel vorgesehen sein, daß in Beantwortung des Wecksignals die ID-Geber eine ID-Geber-Kennung als Antwortsignal an die Steuereinrichtung senden. Die Steuereinrichtung prüft zunächst, ob die antwortenden ID-Geber überhaupt zu dem Kraftfahrzeug gehören. Wenn mehrere ID-Geber vorhanden sind, die zu dem Kraftfahrzeug gehören (zum Beispiel bei Fahrer und Beifahrer) wird einer der ID-Geber für die Kommunikation ausgewählt und für das nachfolgende Verfahren als der dem Kraftfahrzeug zugeordnete ID-Geber angesehen. In dem Wecksignal kann auch eine Fahrzeugkennung enthalten sein, die in den ID-Gebern ausgewertet wird. In diesem Fall antworten nur diejenigen ID-Geber auf das Signal, die sich als zu der Fahrzeugkennung gehörend erkennen.

Vorzugsweise werden vor oder mit dem Senden der codierten ersten Daten Identifikationsdaten für den ausgewählten ID-Geber von der mit der Steuereinrichtung gekoppelten Funksendeeinrichtung gesendet werden.

Auf diese Weise wird der als zugeordneter ID-Geber ausgewählte ID-Geber über seine Auswahl informiert und steht für die weitere Kommunikation zur Verfügung. Die ID-Geber die nicht ausgewählt wurden, können dementsprechend in den ursprünglichen passiven Zustand schalten, in dem sie die nachfolgende Kommunikation nicht stören.

Vorzugsweise enthalten die zweiten Daten einen den ID-Geber eindeutig identifizierenden Code.

Obwohl die Funk-Kommunikation und die Übermittlung der zweiten Nachricht gemäß dem bestimmten Frequenzmuster durchgeführt wird, wird auf diese Weise eine zusätzliche Sicherung der Kommunikation erreicht. Der den ID-Geber eindeutig identifizierende Code ist dabei vorzugsweise nicht mit den Identifikationsdaten identisch, die während des Weckvorgangs übermittelt wurden. Es handelt sich um Daten, die in der Steuereinrichtung in dem Kraftfahrzeug gespeichert sind und die solche ID-Geber identifizieren, die für den Zugriff auf das Kraftfahrzeug vorgesehen sind. Diese Daten können von dem ID-Geber wiederum in Abhängigkeit von den ersten Daten verschlüsselt sein.

Bei einer bevorzugten Ausführungsform wird der den ID-Geber eindeutig identifizierende Code in dem ID-Geber mit einem für den ID-Geber charakteristischen Algorithmus erzeugt.

Es ist in diesem Fall möglich, in dem Steuergerät einen entsprechenden Algorithmus zur Decodierung zu verwenden, der als zu dem identifizierten ID-Geber gehörig abgelegt ist. So wird nicht nur der Inhalt der codierten Daten, der in der Funk-Kommunikation gemäß dem Frequenzmuster übertragen wird, zur Sicherung verwendet, sondern auch die Art beziehungsweise der Algorithmus der Sicherung selbst.

Vorzugsweise enthalten die ersten Daten wenigstens eine Zufallszahl.

Die vom Steuergerät gesendeten ersten Daten gewährleisten auf diese Weise eine weitere Sicherung der Kommunikation, da sowohl die Inhalte der Kommunikation, als auch das bestimmte Frequenzmuster bei jeder angeforderten Überprüfung variiert werden.

Es ist vorteilhaft, wenn das Frequenzmuster wenigstens eine in Abhängigkeit von den ersten Daten bestimmte Frequenz enthält.

Das Frequenzmuster kann Änderungen der Frequenzen, der Sendeamplituden beziehungsweise auch zum Beispiel Informationen über Sendepausen enthalten. Es ist eine Sicherung gegenüber einer Verlängerungsstrecke jedoch insbesondere dann gegeben, wenn wenigstens eine Frequenz in Abhängigkeit von den ersten Daten bestimmt wird. Dies kann zum Beispiel bedeuten, daß die gesamte Kommunikation auf einer konstanten Frequenz ausgeführt wird, die in Abhängigkeit von den ersten Daten gewählt wurde. Jedoch ist auch eine Kombination mit Frequenzwechseln an zeitlich bestimmten Positionen oder zeitlichen Frequenzpausen möglich, wobei nicht jede der gewechselten Frequenzen in Abhängigkeit von den ersten Daten bestimmt sein muß. Zum Beispiel kann ein erster Kommunikationsabschnitt auf einer Frequenz stattfinden, die in Abhängigkeit von den ersten Daten bestimmt wurde, während ein nachfolgender zweiter Kommunikationsabschnitt gemäß einem vorgegebenen und bei jeder Kommunikation gleichbleibenden Frequenzmuster durchgeführt wird.

Weitere vorteilhafte Ausführungen des erfindungsgemäßen Verfahrens sind in den Ansprüchen gekennzeichnet.

Das erfindungsgemäße Verfahren wird im folgenden anhand der beiliegenden Zeichnung, die eine bevorzugte Ausführungsform zeigt, näher erläutert.
Fig. 1 zeigt einen ersten Teil eines Ablaufdiagramms einer bevorzugten Ausführungsform des erfindungsgemäßen Verfahrens;
Fig. 2 zeigt einen zweiten Teil eines Ablaufdiagram einer bevorzugten Ausführungsform des erfindungsgemäßen Verfahrens.

In einem Kraftfahrzeug ist eine Steuereinrichtung eingebaut. In der Umgebung außerhalb des Kraftfahrzeug befinden sich mehrere ID-Geber, die jeweils zum Zugriff auf ein Kraftfahrzeug berechtigen.

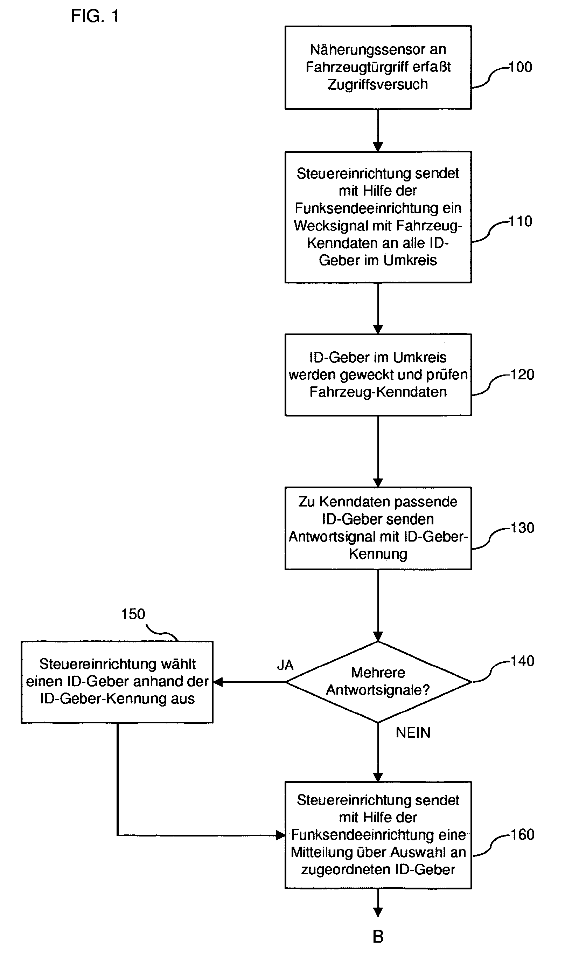

In Fig. 1 nähert sich bei 100 eine Person dem Kraftfahrzeug und bewegt ihre Hand zu einem der Türgriffe des Kraftfahrzeug. Ein Näherungssensor im Bereich des Türgriffs registriert diese Annäherung und übermittelt über eine Signalleitung ein Anforderungssignal an die zentrale Steuereinrichtung des Kraftfahrzeugs. Die Steuereinrichtung verfügt über Sende/Empfangsmittel oder ist mit solchen gekoppelt und sendet bei 110 auf einer Frequenz von 125 KHz ein Wecksignal für die ID-Geber in den Umgebungsbereich des Kraftfahrzeugs. Das Wecksignal enthält auch eine Kraftfahrzeug-Kennung. Die ID-Geber im Umkreis verfügen über einen Transponder und werden durch das Wecksignal bei 120 aus einem Ruhezustand geweckt und aktivieren jeweils eine interne Stromversorgung über eine Batterie. Jeder ID-Geber prüft anhand der Kraftfahrzeug-Kennung, ob das Wecksignal grundsätzlich für ihn bestimmt sein könnte. Sofern ein ID-Geber bestimmt, daß sich das Wecksignal nicht an ihn richtet, schaltet der betreffende ID-Geber wieder in den vorherigen Ruhezustand.

Bei 130 senden diejenigen ID-Geber, deren interne Überprüfung ergeben hat, daß sie durch das Wecksignal angesprochen werden sollten, ein Antwortsignal an die Steuereinrichtung. Es kann sich um mehrere antwortende ID-Geber handeln, z.B. wenn die zugreifende Person mehrere ID-Geber bei sich trägt, oder ggf. eine weitere Person (z.B. Beifahrer) ebenfalls einen ID-Geber bei sich trägt. Das Antwortsignal wird von den nun intern mit Strom versorgten ID-Gebern auf einer Frequenz im MHz-oder GHz-Bereich gesendet. In dem Antwortsignal jedes ID-Gebers ist eine ID-Geber-Kennung codiert, die es der Steuereinrichtung ermöglicht, die antwortenden ID-Geber zu unterscheiden.

Bei 140 prüft die Steuereinrichtung, ob Antwortsignale von mehreren ID-Gebern eingehen. Sofern dies der Fall ist, wird bei 150 von der Steuereinrichtung einer der ID-Geber ausgewählt und für das weitere Verfahren als der dem Kraftfahrzeug zugeordnete ID-Geber angesehen. Die Auswahl in der Steuereinrichtung kann zufällig geschehen, oder gemäß bestimmter Kriterien wie z.B. der Antwortzeit der ID-Geber oder der Signalstärke.

Bei 160 sendet die Steuereinrichtung ein Signal, daß die Auswahl des zugeordneten ID-Gebers den ID-Gebern im Umkreis mitteilt. Die nicht ausgewählten ID-Geber schalten nach Empfang des Signals wieder in den anfänglichen Ruhezustand. Die Auswahl wird auch einem einzelnen antwortenden ID-Geber mitgeteilt, da dem ID-Geber selbst nicht bekannt ist, ob mehrere ID-Geber geantwortet haben.

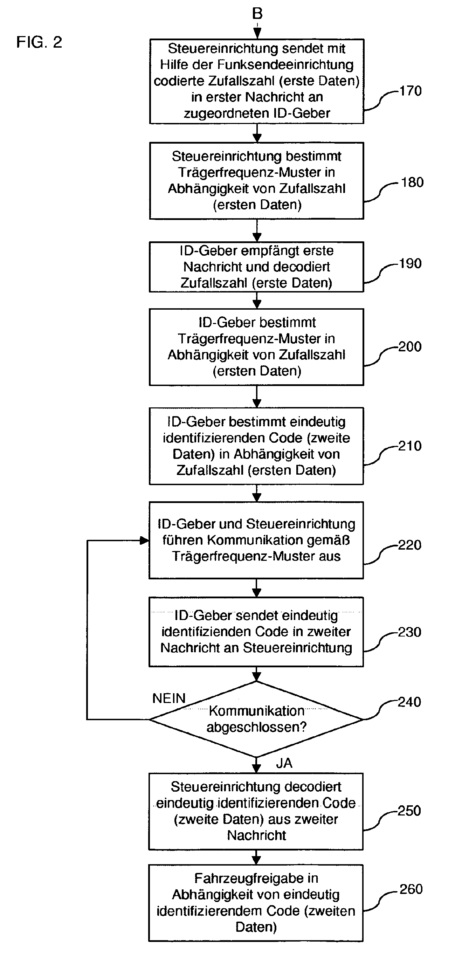

Fig. 2 zeigt die weiteren Schritte des Verfahrens, nachdem die Auswahl des zugeordneten ID-Gebers durch die Steuereinrichtung erfolgt ist.

Die Steuereinrichtung erzeugt mit einer zugehörigen Recheneinheit eine Zufallszahl. Diese Zufallszahl wird mit einem zum Steuergerät gehörenden Schlüssel codiert bzw. verschlüsselt und bei 170, ggf. mit weiteren Daten, in einer ersten Nachricht im MHz- oder GHz-Bereich an den ausgewählten ID-Geber gesendet.

In Abhängigkeit von der Zufallszahl bestimmt die Steuereinrichtung unter Anwendung einer eindeutigen Rechenvorschrift bei 180 ein Frequenzmuster. Zum Beispiel können in Abhängigkeit von der Zufallszahl zwei Frequenzen bestimmt werden, zwischen gewechselt wird. Der Zeitpunkt des Wechsels wird ebenfalls durch die Zufallszahl bestimmt.

Der ID-Geber empfängt bei 190 die Nachricht und decodiert die codierten ersten Daten, die die Zufallszahl enthalten. Die Decodierung ist möglich, da jeder zum Kraftfahrzeug gehörende ID-Geber über gespeicherte Informationen zur Entschlüsselung von Nachrichten seiner zugeordneten Steuereinrichtung verfügt. Unabhängig von der Steuereinrichtung bestimmt auch der ID-Geber in Kenntnis der Zufallszahl bei 200 das Frequenzmuster. Da eine eindeutige Zuordnung zwischen Zufallszahl und Frequenzmuster vorliegt, werden im ID-Geber und in der Steuereinrichtung immer identische Frequenzmuster erzeugt.

Der ID-Geber bestimmt bei 210 außerdem einen Code, der ihn eindeutig identifiziert. Dazu wird eine intern gespeicherte eindeutige ID-Geber-Kennung mit der Zufallszahl verschlüsselt, wobei ein dem ID-Geber zugeordneter Algorithmus angewendet wird.

Nachdem der Code bestimmt ist, nehmen die Steuereinrichtung und der ID-Geber bei 220 die Kommunikation miteinander auf, wobei die Kommunikation auf Trägerfrequenzen ausgeführt wird, die gemäß dem bestimmten Frequenzmuster gewählt werden. Die Steuereinrichtung erwartet auf einer ersten Frequenz, auf die sie gemäß dem bestimmten Frequenzmuster abgestimmt ist, den Start der Kommunikation durch den ID-Geber. In der nachfolgenden Kommunikation schalten die Steuereinrichtung und der ID-Geber die Kommunikationsfrequenz nach Übermittlung einer bestimmten Datenmenge oder nach Ablauf einer bestimmten Kommunikationsdauer um, wobei die jeweilige Datenmenge bzw. die bestimmte Dauer für einen Frequenzwechsel gemäß dem Frequenzmuster festgelegt sind. Während der Kommunikation sendet der ID-Geber bei 230 den bei 210 bestimmten Code als zweite Daten in einer zweiten Nachricht an die Steuereinrichtung.

Bei 240 prüft die Steuereinrichtung, ob die Kommunikation abgeschlossen ist und die vollständige Nachricht übermittelt wurde. Sofern dies nicht der Fall ist, wird die Kommunikation fortgesetzt oder nach Kommunikationsproblemen mindestens einmal erneut gestartet, wobei wieder das bestimmte Frequenzmuster verwendet wird. Sofern die Kommunikation nicht erfolgreich abgeschlossen werden kann, weil dem vorgegebenen Frequenzmuster nicht korrekt gefolgt wird, wird vermutet, daß ein Versuch unternommen wird, die Funkstrecke zwischen ID-Geber und Steuereinrichtung zu verlängern. In diesem Fall wird aufgrund der fehlerhaften Kommunikation der Zugriff auf das Kraftfahrzeug verweigert. Bei solchen Störungen, die nicht durch eine böswillige Verlängerung hervorgerufen werden, kann dann der Zugangsberechtigte die Überprüfung erneut anfordern oder das Kraftfahrzeug manuell mit einem Schlüssel öffnen.

Sofern die Kommunikation erfolgreich abgeschlossen wird, decodiert die Steuereinheit bei 250 in Kenntnis der Zufallszahl und des für den ID-Geber charakteristischen Algorithmus die zweiten Daten aus der zweiten Nachricht, die die ID-Geber-Kennung enthalten. Sofern die ID-Geber-Kennung den ID-Geber als zugangsberechtigt ausweist, veranlaßt die Steuereinrichtung die Freigabe des Kraftfahrzeugs durch z.B. Ansteuern der Zentralverriegelung oder gezielte Freigabe der Tür, an der ein Näherungssensor die Berührung erfaßt hat. Falls der ID-Geber nicht als legitimiert erkannt wird, erfolgt keine Freigabe.

Gemäß dieser Ausführungform wird einerseits sichergestellt, daß grundsätzlich nur dann Zugriff gewährt wird, wenn die Kommunikation zwischen der Steuereinrichtung und einem berechtigten ID-Geber erfolgt. Dies wird durch die Überprüfung der ID-Geber-Kennung erreicht. Zusätzlich wird aber auch gewährleistet, daß nur eine Freigabe erfolgt, wenn sich der ID-Geber tatsächlich in der Nähe des Kraftfahrzeugs befindet. Eine böswillig installierte Funk-Verlängerungsstrecke ist nämlich nicht in der Lage, dem im ID-Geber und der Steuereinrichtung unabhängig voneinander bestimmten Frequenzmuster bei der Kommunikation zu folgen.

Im Rahmen der Erfindung sind Abwandlungen möglich. Insbesondere kann das Frequenzmuster in beliebiger Weise in Abhängigkeit von den Daten bestimmt werden, die die Steuereinrichtung an den ID-Geber sendet. Es kann dafür z.B. eine fest gespeicherte Zuordnung verwendet werden oder eine mathematische Funktion. Ferner kann das Frequenzmuster auch lediglich eine Folge von Frequenzen enthalten, die in Reaktion auf ein fest vorgegebnes Wechsel-Signal zyklisch gewechselt werden. In diesem Fall kann die Steuereinrichtung beispielsweise in zufälligen Zeitabständen einen Frequenzwechsel bei dem ID-Geber anfordern, der jeweils gemäß dem Frequenzmuster erfolgt und dem eine Verlängerungsstrecke nicht folgen kann. Auch die ersten Daten, in deren Abhängigkeit das Frequenzmuster bestimmt wird, können statt oder außer einer Zufallszahl beliebige andere Daten enthalten, die z.B. abhängig von Datum oder Uhrzeit oder Umgebungsparametern sind. Wesentlich ist, daß die Funk-Kommunikation selbst und nicht nur deren Inhalt durch die ersten Daten beeinflußt wird.

## Patentansprüche

1. Verfahren zur Überprüfung einer Legitimation für einen Zugriff auf ein Kraftfahrzeug, mit den Schritten:
Anfordern der Überprüfung der Legitimation,
Codieren erster Daten mit einem ersten Algorithmus durch eine in dem Kraftfahrzeug angeordnete Steuereinrichtung,
Senden der codierten ersten Daten in einer ersten Nachricht mit Hilfe einer mit der Steuereinrichtung gekoppelten Funksendeeinrichtung,
Empfangen der ersten Nachricht in einem dem Kraftfahrzeug zugeordneten ID-Geber,
Decodieren der ersten Daten in dem ID-Geber,
Bestimmen eines Frequenzmusters in Abhängigkeit von den ersten Daten,
Ausführen einer Funk-Kommunikation zwischen einer Funksendeeinrichtung des ID-Gebers und einer Empfangseinrichtung der Steuereinrichtung , wobei - zumindest bei der Übertragung einer zweiten Nachricht - die Trägerfrequenz der Sendeeinrichtung des ID-Gebers gemäß dem Frequenzmuster gewählt wird, wobei die zweite Nachricht codierte zweite Daten enthält, wobei die Empfangseinrichtung von der Steuereinrichtung in Abhängigkeit von den ersten Daten auf die jeweiligen Trägerfrequenzen gemäß dem Frequenzmuster abgestimmt wird, Bestimmen der Legitimation für einen Zugriff auf das Kraftfahrzeug in Abhängigkeit von den zweiten Daten **dadurch gekennzeichnet daß,** beim Ausführen der Funk-Kommunikation von der mit der Empfangseinrichtung gekoppelten Steuereinrichtung überprüft wird, ob von dem Frequenzmuster abweichende weitere Trägerfrequenzen abgestrahlt werden, wobei dann, wenn dies festgestellt wird, die Kommunikation ohne Legitimation abgebrochen wird,

2. Verfahren nach Anspruch 1, wobei
nach dem Anfordern der Überprüfung der Legitimation zunächst ein Wecksignal mit Hilfe der Funksendeeinrichtung der Steuereinrichtung gesendet wird, und
wenigstens ein ID-Geber auf das Wecksignal hin ein Antwortsignal an die Steuereinrichtung sendet, bevor die codierten ersten Daten gesendet werden.

3. Verfahren nach Anspruch 2, wobei dann, wenn mehrere ID-Geber ein Antwortsignal an die Steuereinrichtung senden, einer der ID-Geber von der Steuereinrichtung als der dem Kraftfahrzeug zugeordnete ID-Geber ausgewählt wird.

4. Verfahren nach Anspruch 3, wobei vor oder mit dem Senden der codierten ersten Daten Identifikationsdaten für den ausgewählten ID-Geber von der mit der Steuereinrichtung gekoppelten Funksendeeinrichtung gesendet werden.

5. Verfahren nach einem der Ansprüche 1 bis 4, wobei die zweiten Daten einen den ID-Geber eindeutig identifizierenden Code enthalten.

6. Verfahren nach Anspruch 5, wobei der den ID-Geber eindeutig identifizierende Code in dem ID-Geber mit Hilfe eines für den ID-Geber charakteristischen Algorithmus erzeugt wird.

7. Verfahren nach Anspruch 5 oder 6, wobei der den ID-Geber eindeutig identifizierende Code in Abhängigkeit von den ersten Daten erzeugt wird.

8. Verfahren nach einem der Ansprüche 1 bis 7, wobei die ersten Daten wenigstens eine Zufallszahl enthalten.

9. Verfahren nach einem der Ansprüche 1 bis 8, wobei das Frequenzmuster zumindest eine in Abhängigkeit von den ersten Daten bestimmte Frequenz enthält.

10. Verfahren nach einem der Ansprüche 1 bis 9, wobei das Frequenzmuster wenigstens einen Frequenzwechsel enthält, dessen zeitliche Position in Abhängigkeit von den ersten Daten bestimmt wird.

11. Verfahren nach einem der Ansprüche 1 bis 10, wobei die Überprüfung der Legitimation aufgrund eines von einem Näherungssensor an einem Türgriff des Kraftfahrzeugs ausgegebenen Annäherungssignals angefordert wird.

## Claims

1. Method of checking a legitimation for access to a motor vehicle, with the steps:
- requesting checking of the legitimation,
- encoding of first data with a first algorithm by a control device disposed in the motor vehicle,
- transmitting the encoded first data in a first message with the aid of a radio transmitting device coupled to the control device,
- receiving the first message in an ID transmitter assigned to the motor vehicle,
- decoding the first data in the ID transmitter,
- determining a frequency pattern as a function of the first data,
- carrying out a radio communication between a radio transmitting device of the ID transmitter and a receiving device of the control device, wherein - at least during the transmission of a second message - the carrier frequency of the transmitting device of the ID transmitter is chosen according to the frequency pattern, the second message containing encoded second data, wherein the receiving device of the control device is adapted as a function of the first data to the respective carrier frequencies according to the frequency pattern,
determining the legitimation for access to the motor vehicle as a function of the second data,
**characterised in that** during the radio communication the control device coupled to the receiving device checks whether further carrier frequencies are emitted which deviate from the frequency pattern, and when this is established the communication without legitimation is terminated.

2. Method as claimed in Claim 1, in which after the requesting of the checking of the legitimation first of all an alarm signal is transmitted with the aid of the radio transmitting device of the control device, and in response to the alarm signal at least one ID transmitter transmits a response signal to the control device before the encoded first data are transmitted.

3. Method as claimed in Claim 2, wherein when a plurality of ID transmitters transmit a response signal to the control device one of the ID transmitters of the control device is selected as the ID transmitter assigned to the motor vehicle.

4. Method as claimed in Claim 3, wherein before or with the transmission of the encoded first data identification data for the selected ID transmitter are transmitted by the radio transmitting device coupled to the control device.

5. Method as claimed in any one of Claims 1 to 4, wherein the second data contain a code which unambiguously identifies the ID transmitter.

6. Method as claimed in Claim 5, **characterised in that** the code which unambiguously identifies the ID transmitter is generated in the ID transmitter with the aid of an algorithm which is characteristic for the ID transmitter.

7. Method as claimed in Claim 5 or 6, wherein the code which unambiguously identifies the ID transmitter is generated as a function of the first data.

8. Method as claimed in any one of Claims 1 to 7, wherein the first data contain at least one random number.

9. Method as claimed in any one of Claims 1 to 8, wherein the frequency pattern contains at least one frequency determined as a function of the first data.

10. Method as claimed in any one of Claims 1 to 9, wherein the frequency pattern contains at least one frequency change, the chronological position of which is determined as a function of the first data.

11. Method as claimed in any one of Claims 1 to 10, wherein the checking of the legitimation is requested on the basis of a proximity signal transmitted by a proximity sensor on a door handle of the motor vehicle.

## Revendications

1. Procédé de vérification d'une légitimation d'accès à un véhicule, procédé comprenant des étapes consistant à :
demander la vérification de la légitimation ;
coder les premières données avec un premier algorithme à l'aide d'un dispositif de réglage placé dans le véhicule ;
envoyer les premières données codées dans un premier message à l'aide d'un dispositif de transmission radio couplé au dispositif de réglage ;
recevoir le premier message dans un identificateur affecté au véhicule ;
décoder les premières données dans l'identificateur ;
déterminer un échantillon de fréquence en fonction des premières données ;
établir une communication radio entre un dispositif de transmission radio de l'identificateur et un dispositif de réception du dispositif de réglage, dans laquelle, au moins lors de la transmission d'un deuxième message, la fréquence porteuse du dispositif de transmission radio de l'identificateur est sélectionnée en fonction de l'échantillon de fréquence, sachant que le deuxième message contient les deuxièmes données codées, sachant que le dispositif de réception du dispositif de réglage est ajusté, en fonction des premières données, sur les fréquences porteuses respectives, conformément à l'échantillon de fréquence, **caractérisé en ce que** le système vérifie, pour la définition de la légitimation d'un accès au véhicule en fonction des deuxièmes données, lors de l'établissement de la communication radio du dispositif de réglage couplé au dispositif de réception, si d'autres fréquences porteuses déviées sont émises par l'échantillon de fréquence, sachant que, si ceci est alors constaté, la communication est interrompue sans légitimation.

2. Procédé selon la revendication 1, dans lequel, après la demande de vérification de légitimation, un signal d'appel est tout d'abord émis à l'aide du dispositif de transmission radio du dispositif de réglage et au moins un identificateur envoie, à partir du signal d'appel, un signal de réponse au dispositif de réglage avant que les premières données codées ne soient envoyées.

3. Procédé selon la revendication 2, dans lequel, si plusieurs identificateurs envoient un signal de réponse au dispositif de réglage, l'un des identificateurs du dispositif de réglage est sélectionné comme étant l'identificateur affecté au véhicule.

4. Procédé selon la revendication 3, dans lequel, avant ou pendant l'envoi des premières données codées, des données d'identification pour l'identificateur sélectionné sont émises par le dispositif de transmission radio couplé au dispositif de réglage.

5. Procédé selon l'une quelconque des revendications 1 à 4, dans lequel les deuxièmes données contiennent un code permettant d'identifier clairement l'identificateur.

6. Procédé selon la revendication 5, dans lequel le code permettant d'identifier clairement l'identificateur est produit dans l'identificateur à l'aide d'un algorithme caractéristique de l'identificateur.

7. Procédé selon la revendication 5 ou 6, dans lequel le code permettant d'identifier clairement l'identificateur est produit en fonction des premières données.

8. Procédé selon l'une quelconque des revendications 1 à 7, dans lequel les premières données contiennent au moins un nombre aléatoire.

9. Procédé selon l'une quelconque des revendications 1 à 8, dans lequel l'échantillon de fréquence contient au moins une fréquence définie en fonction des premières données.

10. Procédé selon l'une quelconque des revendications 1 à 9, dans lequel l'échantillon de fréquence contient au moins un changement de fréquence dont la position dans le temps est définie en fonction des premières données.

11. Procédé selon l'une quelconque des revendications 1 à 10, dans lequel la vérification de la légitimation est demandée en raison d'un signal d'approche émis par un capteur de proximité situé sur une poignée de porte du véhicule.
